# EUROPEAN PATENT APPLICATION

(11) **EP 1 955 985 A1**
(43) Date of publication of application: **13.08.2008**
(21) Application number: 06824218.9
(22) Date of filing: 10.11.2006
(51) Int. Cl.: C04B 7/04

(54) **METHOD OF PRODUCING PORTLAND CEMENT HAVING ELECTRICAL CONDUCTION AND OPTICAL PROPERTIES**

(30) Priority: 11.11.2005 MX PA05012185; 11.11.2005 MX PA05012186
(71) Applicant: CONCRETOS TRANSLÜCIDOS, S. de R.L. de C.V., C.P. 01020 Mexico D.F. (MX)
(72) Inventor: GALVÁN CÁZARES, Sergio Omar, C.P. 01020, México, D.F. (MX); SOSA GUTIÉRREZ, Joel, C.P. 01020, México, D.F. (MX)
(74) Representative: Ungria Lopez, Javier
(86) International application number: PCT/MX2006/000124
(87) International publication number: WO 2007/055556

(57) **Abstract**

The invention relates to a method of producing conductive and/or translucent Portland cement which has high sulphate resistance and which has a service life of up 70 years under normal service conditions. Once the inventive cement has set, light can pass therethrough. Up to 70% of the final resistance of the cement is reached within 48 hours of setting. The inventive production method is **characterised in that** it produces a fineness of more than 3450 cm²/g and in that, upon setting, the concrete has a mechanical strength of between 75 Mpa and 250 Mpa, without tha addition of additives, thereby enabling the water required to obtain a determined slump to be reduced.

## Description

### FIELD OF THE INVENTION

This invention relates to a cement with optical and electrical properties that significantly set it apart from those currently existing in the state of the art, as well as a method for manufacturing such cement.

### BACKGROUND OF THE INVENTION

Portland cement corresponds to a specific type of cement the strength properties of which are due to its composition and manufacturing process or method. Generally, the method and composition for Portland cement is as follows:

Clay and limestone materials are crushed, mixed and ground down to a fine powder. The composition of this mixture must remain constant within narrow limits because any distancing from the optimum point would result in a loss of quality. The mixing and grindings can be performed dry (dry method) or with water (wet method). In any case, whatever the preparation method, it is essential for the mixture to have the correct composition, which is finally ground down and thoroughly mixed before entering the kiln.

The mixture is then taken to a rotary kiln in which it is slowly heated to the point of clinkerisation. Water and carbon dioxide are expelled prior to reaching this point. On approaching the hottest temperatures, chemical reactions take place between the raw mixture components. New compounds are formed during these reactions, with some of them melting, leaving the load partially melted. The clinker then falls onto one of the various coolers or onto the pile of clinker where it cools, sometimes by means of a water spray. When cool, it is mixed with a carefully calculated amount of fired or raw gypsum and ground down until it is a fine powder, whereupon it constitutes commercial Portland cement.

Gypsum or calcium sulphate is added in small amounts to the final grinding operation to control the setting temperature and prevent false setting. However, if the amount of gypsum is not correctly monitored, a small variation in the established proportions of the crushed rock mixture could be sufficient to completely alter the characteristics of the mixture or the cement properties.

Cement obtained in this way has characteristics similar to rock when it hardens. It behaves like a high-density dielectric solid that does not allow light to pass through it and it has high volumetric weight and mechanical behaviour similar to rock.

For the purpose of suppressing these and other disadvantages, a Portland cement manufacturing method was developed that permits the manufacture of a concrete, which when set allows light to pass therethrough (in other words is translucent) and/or improves its electrical properties to convert it into an electrical conductor, together with enhancing the mechanical characteristics of the concrete through suitable additions to the grinding process, which is also another object of this invention.

### OBJECT OF THE INVENTION

A purpose of this invention is to disclose a composition and method for the manufacture of Portland cement, the new characteristics of which are those of allowing light to pass through it, in other words, being translucent.

A second purpose Is to describe a composition and manufacturing method for Portland cement possessing Improved electrical conduction properties compared to already known cements.

Finally, a third purpose of this invention is to provide a composition and manufacturing method for Portland cement having translucent and/or small electrical current conduction properties, in addition to high mechanical strength and long useful life.

### DESCRIPTION OF THE INVENTION

In general, all types of materials which may be used to make Portland cement, and which provide the required chemical composition when calcined may be used in the present invention. However, taking economy into account, the number of such materials is limited.

Suitable limestone materials are: gypsum, cement rock, chalk, marl, seashells and waste from alkali production.

In addition, some components have been found to be harmful in cement and this further limits use of gypsums and marls, etc.

Gypsum and other calcareous substances rich In magnesium carbonate may be unsuitable because an amount exceeding 5% is considered harmful in Portland cement and is not permitted in normal specifications. Veins of chalk or pyrites may mean that the sulphate content is excessive. Chalk sometimes contains nodules of flintstone that must be removed and marl could contain excessive amounts of siliceous sand.

Pure gypsum is hard and requires a lot of energy during grinding. However, if it is found mixed with slate, it is softer. Gypsum cement rock, which is found in great abundance in the Lehigh Valley, is a gypsum containing such an amount of clay material whereby it is not necessary to use a mixture made with rocks with clay and poor in time.

Marl is a sedimentary calcareous material that forms at the bottom of certain lakes and is often mixed with a large amount of small shells. Significant formations of marl and seashells are exploited in Michigan, USA and in Norfolk, Virginia, also in USA. in Texas and Redwood California, USA there are cement works that successfully work with limestone materials from old oyster beds. Chalk is employed in Louisiana, USA and to a large extent in the UK and the rest of Europe.

In Michigan USA, the precipitated calcium carbonate obtained as a waste product from the manufacture of caustic soda in the Le Blanc process has been employed in Portland cement production.

The following materials can also be used to make Portland cement: clay, slate, schist, blast furnace slag, ash and cement rock.

The first step in mixing materials should take place in the quarry using steam shovels, with one shovelful of clay and two of stone, or two wagonloads of one rock and three of the other. The rock is then passed through a battery of crushing mills and is converted into gravel.

The mixture is then taken to a rotary kiln in which it is slowly heated to 1,450 degrees centigrade until the clinkerisation point. The water and carbon dioxide are expelled prior to reaching this point. On approaching the highest temperatures, chemical reactions take place between the raw mixture components. New compounds are formed during these reactions, with some of them melting, leaving the load partially melted.

The clinker then falls onto one of the various coolers or onto the pile of clinker where it cools.

If the mixture is prepared as indicated, then through constant monitoring of Its lime content, various modifications can be made to the clay or gypsum amounts when they are added to the grinders, if these modifications are necessary to maintain an approximate constant composition. However, if it is seen that the crushed rock in the tanks has higher or lower lime content, the content of two or more tanks is mixed so that mixture proportions are as close as possible to the suitable composition.

Clinker cooling can be produced by a closed cooler using air circulation, in which the clinker cooling air is employed as secondary or even primary kiln combustion. This allows economy in fuel as well as better clinker calcination, immediate use of clinker in grinding and enhanced grinding, together with better strength values and volume stability in the cement.
When the clinker is taken to the mills, It Is mixed with a carefully calculated amount of retardant consisting of plaster stone (CaSO₄-2H₂O) or baked plaster (CaSO₄· ½ H₂O) because, without this, when the cement is mixed with water to form concrete, it could set too quickly. The amount of plaster stone or baked plaster is limited by the alumina content of the mixture. The mixture of clinker and plaster stone or baked plaster is ground down with a surface area that is specified for each type of cement because the cement will develop its strength much quicker the more finely it is ground down.

It is in this stage of the process when glass powder and epoxy resins and/or breeze-type carbon are added to the clinker, provided the magnesia content of the composition Is no greater than 5%. The grain size of this dust must be less than one millimetre in diameter. The amount of glass dust employed should be 5% of the total weight of plaster stone and baked plaster.

The content of pieces of epoxy resin must be carefully controlled and monitored throughout the grinding process and should be added when the clinker has already been cooled and does not have a temperature exceeding 75 degrees centigrade. The resin content should lie between 30% and 54% of the clinker weight, with 46% being the optimum value.

In the resin grain size used in this grinding should be at least 55% with a diameter greater than 20 millimetres and a maximum of 45% with a diameter less than 95 millimetres.

It is also important for the materials (resins and clinker) to be finely ground down and uniformly mixed, because, if they are not, the reactions will not be uniform throughout the mass. One area of resin particles may be dragged so far away from another with acid components that they remain in free resin form.

During the grinding operation, the temperature in the mill should not exceed 75 degrees centigrade in order to prevent any reactions between the resins and clinker components.

The breeze-type coke must be carefully controlled and monitored throughout the grinding process and should be added when the clinker has already been cooled and does not have a temperature exceeding 55 degrees centigrade. The carbon content should be between 37% and 49% of the weight of the clinker, with the optimum being 42.7%.

The grain size for the coke use in the grinding operation should have at least 45% coke with a diameter exceeding 12 millimetres and 55% of the coke with a diameter of less than 7 millimetres. It is also important for the materials (resins and clinker) to be finely ground down and uniformly mixed because, if they are not, the reactions will not be uniform throughout the mass and one area of coke particles may be dragged so far away from another with acid components that they remain in free coke form.

The grinding process must ensure a fineness of between 3,450 and 3,850 cm²/g, which should be monitored by the amount of material passing through a number 100 or 200 sieve (free mesh span of 0.147 and 0.074 millimetres, respectively). In the case of the cement not having the mentioned fineness, then a new grinding stage must be initiated until the established value is obtained.

Once ground down and while still warm from the grinding process, it should be stored in silos for at least three days, but no more than six, so that all the small quantities of lime that did not combine during the calcination process can hydrate and carbonate through reactions with water and carbon dioxide in the air and thus lose the expansion resulting from these remaining particles without combining with the lime.

## Claims

1. Method of manufacturing Portland cement with optical and electrical conduction properties **characterised in that** it consists of the following stages:
mixing raw materials in the quarry using steam shovels, with one shovelful of clay and two of stone, or two wagonloads of the cement rock and three of the other, the rock is then passed through a battery of crushing mills and be converted into gravel;
taking the mixture to a rotary kiln in which it is slowly heated to 1,450 degrees centigrade up to the clinkerisation point;
taking the clinker to one of various coolers;
adding the amounts of clay or gypsum;
tipping the mixture in to mills;
cooling the clinker in a closed cooler with air circulation;
taking the clinker to the mills and carefully mix with a carefully weighed amount of retardant, such as plaster stone (CaSO₄·2H₂O) or baked plaster (CaSO₄·½ H₂O);
grounding down the mixture of clinker and plaster stone or baked plaster with a surface area that is specified for each type of cement because the cement will develop its strength much quicker the more finely it is ground down;
adding glass powder and epoxy resins and/or breeze-type carbon are added to the clinker, together with the plaster stone and baked plaster;
continue grinding to obtain a fineness of between 3.450 and 3.850 cm²/g, which should be monitored by the percentage of material passing through a number 100 or 200 sieve (free mesh span of 0.147 and 0.074 millimetres respectively);
storing it in silos for at least three days, but no more than six.

2. Method of manufacturing Portland cement with optical and electrical conduction properties **characterised in that** it consists of the following stages:
mixing raw materials in the quarry using steam shovels, with one shovelful of clay and two of stone, or two wagonloads of the cement rock and three of the other, the rock Is then passed through a battery of crushing mills and be converted into gravel;
taking the mixture to a rotary kiln in which it is slowly heated to 1,450 degrees centigrade up to the clinkerisation point;
taking the clinker to one of various coolers;
adding the amounts of clay or gypsum;
tipping the mixture in to mills;
cooling the clinker In a closed cooler with air circulation;
taking the clinker to the mills and carefully mix with a carefully weighed amount of retardant, such as plaster stone (CaSO₄·2H₂O) or baked plaster (CaSO₄·½ H₂O);
grounding down the mixture of clinker and plaster stone or baked plaster with a surface area that is specified for each type of cement because the cement will develop its strength much quicker the more finely it is ground down;
adding glass powder and epoxy resins and/or breeze-type carbon to the clinker, together with the plaster stone and baked plaster;
continue grinding to obtain a fineness greater than 3,450 cm²/g, which should be monitored by the percentage of material passing through a number 100 or 200 sieve (free mesh span of 0.147 and 0.074 millimetres respectively);
storing it in silos for at least three days, but no more than six.

3. Method of manufacturing Portland cement with optical and electrical conduction properties **characterised in that** it consists of the following stages:
mixing raw materials in the quarry using steam shovels, with one shovelful of clay and two of stone, or two wagonloads of the cement rock and three of the other, the rock Is then passed through a battery of crushing mills and be converted into gravel;
taking the mixture to a rotary kiln in which it is slowly heated to 1,450 degrees centigrade up to the clinkerisation point;
taking the clinker to one of various coolers;
adding the amounts of clay or gypsum;
tipping the mixture in to mills;
cooling the clinker in a closed cooler with air circulation;
taking the clinker to the mills and carefully mix with a carefully weighed amount of retardant, such as plaster stone (CaSO₄·2H₂O) or baked plaster (CaSO₄·½ H₂O);
grounding down the mixture of clinker and plaster stone or baked plaster with a surface area that is specified for each type of cement because the cement will develop its strength much quicker the more finely it is ground down;
adding breeze-type carbon to the clinker, together with the plaster stone and baked plaster;
continue grinding to obtain a fineness greater than 3,850 cm²/g, which should be monitored by the percentage of material passing through a number 100 or 200 sieve (free mesh span of 0.147 and 0.074 millimetres respectively);
storing it in silos for at least three days, but no more than six.

4. Method of manufacturing Portland cement with optical and electrical conduction properties in accordance with claim 1 or 2, **characterised in that** the glass powder consists of those present on the market, the composition of which contains a maximum magnesia content of 5%.

5. Method of manufacturing Portland cement with optical and electrical conduction properties in accordance with claim 1 or 2, **characterised in that** the glass powder grain size is less than 1 millimetre in diameter.

6. Method of manufacturing Portland cement with optical and electrical conduction properties in accordance with claim 1 or 2, **characterised in that** the amount of glass powder to be employed should be 5% of the total weight of plaster stone and baked plaster.

7. Method of manufacturing Portland cement with optical and electrical conduction properties in accordance with claim 1 or 2, **characterised In that** the content of pieces of epoxy resin, is between 30% and 54% of the weight of clinker, with 46% being optimum.

8. Method of manufacturing Portland cement with optical and electrical conduction properties in accordance with claim 1 or 2, **characterised in that** the pieces of epoxy resin are added when the clinker has already been cooled and does not have a temperature exceeding 75 degrees centigrade.

9. Method of manufacturing Portland cement with optical and electrical conduction properties in accordance with claim 1 or 2, **characterised in that** the resin grain size used in this grinding should be at least 55% with a diameter greater than 20 millimetres and a maximum of 45% with a diameter less than 15 millimetres.

10. Method of manufacturing Portland cement with optical and electrical conduction properties in accordance with claim 1 or 3, **characterised in that** the breeze-type coke content should be between 37% and 49% the weight of the clinker, with the optimum being 42.7%.

11. Method of manufacturing Portland cement with optical and electrical conduction properties in accordance with claim 1 or 3, **characterised in that** the breeze-type coke is added when the clinker has already been cooled and does not have a temperature exceeding 55 degrees centigrade.

12. Method of manufacturing Portland cement with optical and electrical conduction properties in accordance with claim 1 or 2, **characterised in that** the grain size for the coke use in this grinding operation should have at least 45% coke with a diameter exceeding 12 millimetres and 55% of the coke with a diameter of less than 7 millimetres.

13. Method of manufacturing Portland cement with optical and electrical conduction properties in accordance with claim 1 **characterised in that** the resulting cement has a fineness better than 3,450 cm²/g.

14. Portland cement obtained in accordance with the procedure claimed in clause 1 or 2 **characterised in that** it is translucent when set.

15. Portland cement in accordance with claim 14 **characterised in that** it presents a mechanical strength of 75 MPa and up to 250 MPa when its sets and without any additions.

16. Portland cement in accordance with claim 14 **characterised in that** it permits a reduction in the water required to obtain a determined tempering.

17. Portland cement in accordance with claim 14 **characterised in that** once it is hydrated it acquires 70% of its final strength within 48 hours.

18. Portland cement in accordance with claim 14 **characterised in that** maintains an opaque glass surface appearance.

19. Portland cement in accordance with claim 14 **characterised in that** it permits cathode protection of the reinforcement steel, together with any material found in the reinforced concrete.

20. Portland cement in accordance with claim 14 **characterised in that** maintains a useful service lifetime of up to 70 years under normal service conditions.

21. Portland cement in accordance with claim 14 **characterised in that** it is highly sulphate-resistant.

22. Portland cement obtained in accordance with the procedure claimed in clause 1 or 3 **characterised in that** it permits electrical conduction even before it sets.

23. Portland cement in accordance with claim 22 **characterised in that** it has a fineness exceeding 3,450 cm²/g.

24. Portland cement in accordance with claim 22 **characterised in that** it permits cathode protection of the reinforcement steel, together with any material found in the reinforced concrete.

25. Portland cement in accordance with claim 22 **characterised in that** maintains a useful service lifetime of up to 70 years under normal service conditions.

26. Portland cement in accordance with claim 22 **characterised in that** it is moderately sulphate-resistant.

27. Portland cement in accordance with claim 22 **characterised in that** it permits a reduction in the water required to obtain a determined tempering.

28. Portland cement in accordance with claim 22 **characterised in that** it presents a mechanical strength of 26 MPa and up to 65 MPa when its sets and without any additions.

29. Portland cement in accordance with claim 22 **characterised in that** once it is hydrated it acquires 60% of its final strength within 40 hours.
